(19) Europäisches Patentamt
European Patent Office
Office européen des brevets

(11) **EP 4 366 311 A1**

(12) **EUROPEAN PATENT APPLICATION**
published in accordance with Art. 153(4) EPC

(43) Date of publication:
**08.05.2024 Bulletin 2024/19**

(21) Application number: **22833712.7**

(22) Date of filing: **01.07.2022**

(51) International Patent Classification (IPC):
*H04N 19/82* (2014.01)    *H04N 19/117* (2014.01)
*H04N 19/119* (2014.01)    *H04N 19/96* (2014.01)
*H04N 19/625* (2014.01)    *H04N 19/124* (2014.01)
*H04N 19/70* (2014.01)    *H04N 19/186* (2014.01)

(52) Cooperative Patent Classification (CPC):
H04N 19/117; H04N 19/119; H04N 19/124;
H04N 19/186; H04N 19/625; H04N 19/70;
H04N 19/82; H04N 19/96

(86) International application number:
**PCT/KR2022/009548**

(87) International publication number:
**WO 2023/277659 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.07.2021 KR 20210086963**

(71) Applicant: **LG Electronics Inc.**
**Yeongdeungpo-gu**
**Seoul 07336 (KR)**

(72) Inventors:
• **CHOI, Jangwon**
  **Seoul 06772 (KR)**
• **LIM, Jaehyun**
  **Seoul 06772 (KR)**
• **YOO, Sunmi**
  **Seoul 06772 (KR)**
• **CHOI, Jungah**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **IMAGE ENCODING/DECODING METHOD, METHOD FOR TRANSMITTING BITSTREAM, AND RECORDING MEDIUM STORING BITSTREAM**

(57) Provided are an image encoding/decoding method, a bitstream transmission method, and a computer-readable recording medium which stores a bitstream. An image decoding method according to the present disclosure may be an image decoding method performed by an image decoding device, the method comprising the steps of: determining whether a cross component sample adaptive offset (CC-SAO) is activated, on the basis of a value of a first syntax element; deriving collocated luma samples and collocated chroma samples corresponding to each other from reconstructed samples on the basis of a chroma format of the reconstructed samples, on the basis of the value of the first syntax element specifying that the CC-SAO is activated; and determining an offset to be applied to the reconstructed samples on the basis of the collocated luma samples and the collocated chroma samples.

FIG. 17

START

DETERMINE CHROMA FORMAT OF RECONSTRUCTED SAMPLES — S1705

DERIVE COLLOCATED CHROMA SAMPLES/COLLOCATED LUMA SAMPLE BY CHANGING LOCATION OF LUMA SAMPLE/CHROMA SAMPLES ACCORDING TO DETERMINATION RESULT — S1710

END

**Description**

**Technical Field**

The present disclosure relates to an image encoding/decoding method, a method of transmitting a bitstream and a recording medium storing a bitstream and relates to a CC-SAO applied to various color formats.

**Background Art**

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

**Disclosure**

**Technical Problem**

An object of the present disclosure is to provide an image encoding/decoding method and apparatus with improved encoding/decoding efficiency.

An object of the present disclosure is to provide an image encoding/decoding method that applies a CC-SAO to various color formats.

An object of the present disclosure is to provide an image encoding/decoding method capable of efficiently deriving a collocated sample.

An object of the present disclosure is to provide an image encoding/decoding method capable of improving compression efficiency for a CC-SAO.

An object of the present disclosure is to provide a non-transitory computer-readable recording medium storing a bitstream generated by an image encoding method according to the present disclosure.

An object of the present disclosure is to provide a non-transitory computer-readable recording medium storing a bitstream received, decoded and used to reconstruct an image by an image decoding apparatus according to the present disclosure.

An object of the present disclosure is to provide a method of transmitting a bitstream generated by an image encoding method according to the present disclosure.

The technical problems solved by the present disclosure are not limited to the above technical problems and other technical problems which are not described herein will become apparent to those skilled in the art from the following description.

**Technical Solution**

An image decoding method according to an aspect of the present disclosure may be performed by an image decoding apparatus and may comprise determining whether a cross component sample adaptive offset (CC-SAO) is activated based on a value of a first syntax element, deriving a collocated luma sample and collocated chroma samples corresponding to each other from reconstructed samples based on a chroma format of the reconstructed samples, based on the value of the first syntax element specifying that the CC-SAO is activated, and determining an offset to be applied to the reconstructed samples based on the collocated luma sample and the collocated chroma samples.

An image encoding method according to another aspect of the present disclosure may be performed by an image encoding apparatus and may comprise deriving a collocated luma sample and collocated chroma samples corresponding to each other from reconstructed samples based on a chroma format of the reconstructed samples, determining a cross component sample adaptive offset (CC-SAO) to be applied to the reconstructed samples based on the collocated luma sample and the collocated chroma samples and encoding a first syntax element specifying whether the CC-SAO is activated.

A computer-readable recording medium according to another aspect of the present disclosure can store a bitstream generated by the image encoding method or apparatus of the present disclosure.

A transmission method according to another aspect of the present disclosure may transmit a bitstream generated by the image encoding method or apparatus of the present disclosure.

The features briefly summarized above with respect to the present disclosure are merely exemplary aspects of the detailed description below of the present disclosure, and do not limit the scope of the present disclosure.

**Advantageous Effects**

According to the present disclosure, it is possible to provide an image encoding/decoding method and apparatus with improved encoding/decoding efficiency.

According to the present disclosure, it is possible to efficiently derive a collocated sample.

According to the present disclosure, it is possible to improve complexity of an image encoding apparatus according to CC-SAO performance.

According to the present disclosure, it is possible to improve bit efficiency for performing a CC-SAO.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a diagram showing various examples of color formats.

FIG. 5 is a diagram schematically showing filtering units within the image encoding apparatus.

FIG. 6 is a flowchart illustrating an image/video encoding method based on in-loop filtering according to an embodiment of the present disclosure.

FIG. 7 is a diagram schematically showing filtering units within the image decoding apparatus.

FIG. 8 is a flowchart illustrating an image/video decoding method based on in-loop filtering according to an embodiment of the present disclosure.

FIG. 9 is a diagram illustrating pixel patterns according to an edge direction of an edge offset.

FIG. 10 is a diagram illustrating division of a pixel strength range of a band offset.

FIG. 11 is a diagram illustrating a decoding process of a CC-SAO according to an embodiment of the present disclosure.

FIG. 12 is a diagram illustrating a location relationship between a luma sample and chroma samples in a 4:2:0 chroma format.

FIG. 13 is a flowchart illustrating an image encoding method according to an embodiment of the present disclosure.

FIG. 14 is a flowchart illustrating an image decoding method according to an embodiment of the present disclosure.

FIG. 15 is a diagram illustrating a location relationship between a luma sample and chroma samples in a 4:4:4 chroma format.

FIG. 16 is a diagram illustrating a location relationship between a luma sample and chroma samples in a 4:2:2 chroma format.

FIG. 17 is a flowchart illustrating an image encoding/decoding method according to another embodiment of the present disclosure.

FIG. 18 is a flowchart illustrating an image encoding/decoding method according to another embodiment of the present disclosure.

FIG. 19 is a flowchart illustrating an image encoding/decoding method according to another embodiment of the present disclosure.

FIG. 20 is a flowchart illustrating an image encoding method according to another embodiment of the present disclosure.

FIG. 21 is a flowchart illustrating an image decoding method according to another embodiment of the present disclosure.

FIG. 22 is a view illustrating a content streaming system to which an embodiment of the present disclosure is applicable.

## Mode for Invention

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

**Overview of video coding system**

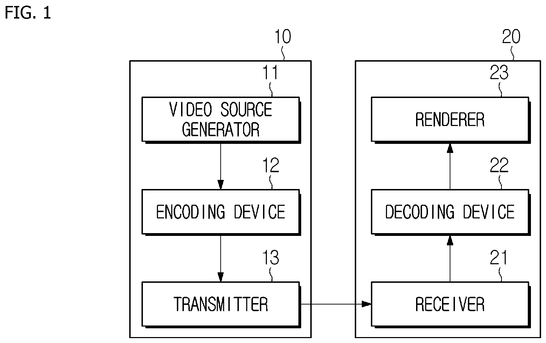

FIG. 1 is a view schematically showing a video coding system, to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit 12 and a transmitter 13. The decoding apparatus 20 according to an embodiment may include a receiver 21, a decoding unit 22 and a renderer 23. The encoding unit 12 may be called a video/image encoding unit, and the decoding unit 22 may be called a video/image decoding unit. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may transmit the encoded video/image information or data output in the form of a bitstream to the receiver 21 of the decoding apparatus 20 through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

**Overview of image encoding apparatus**

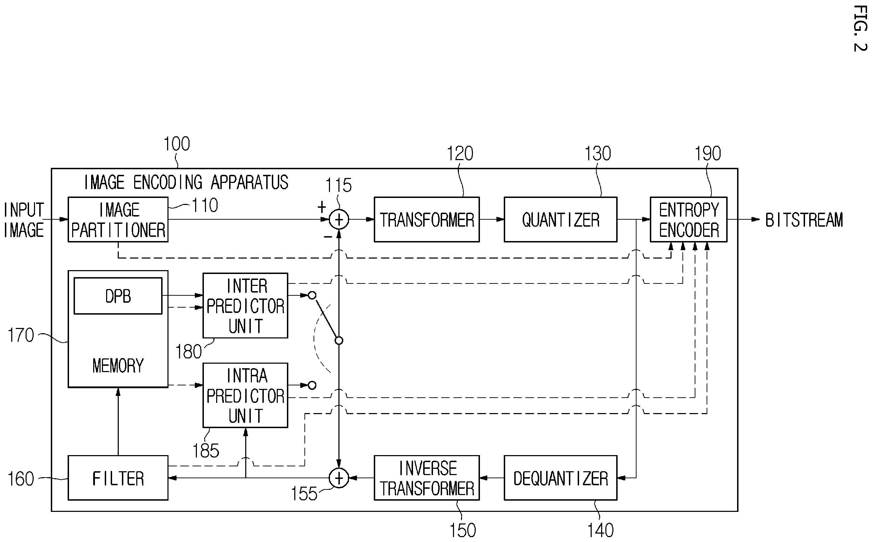

FIG. 2 is a view schematically showing an image encoding apparatus, to which an embodiment of the present disclosure is applicable.

As shown in FIG. 2, the image source device 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image source device 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image source device 100 into one or more processing units. For example, the processing unit may be called a coding unit (CU). The coding unit may be obtained by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth obtained by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform obtained based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image source device 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image source device 100, prediction mismatch between the image source device 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

### Overview of image decoding apparatus

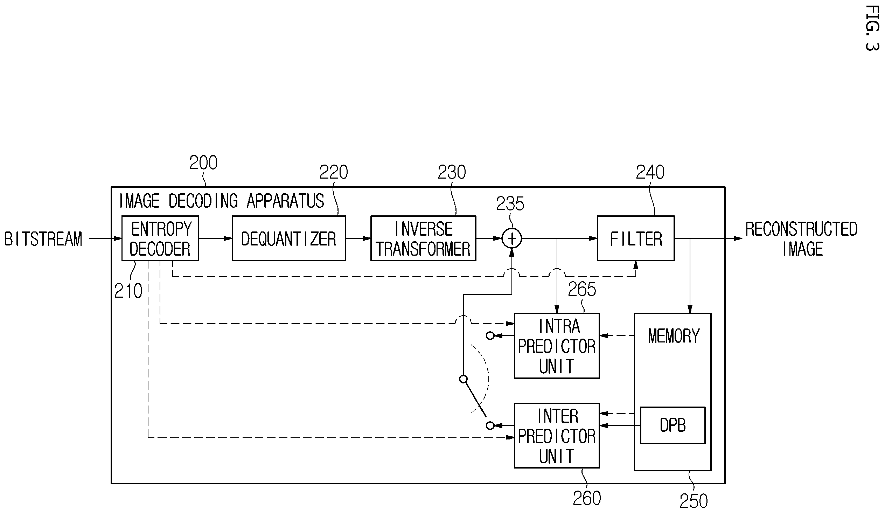

FIG. 3 is a view schematically showing an image decoding apparatus, to which an embodiment of the present disclosure is applicable.

As shown in FIG. 3, the image reception device 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

All or at least some of a plurality of components configuring the image reception device 200 may be configured by a hardware component (e.g., a decoder or a processor) according to an embodiment. In addition, the memory 250 may include a decoded picture buffer (DPB) or may be configured by a digital storage medium.

The image reception device 200, which has received a bitstream including video/image information, may reconstruct an image by performing a process corresponding to a process performed by the image source device 100 of FIG. 2. For example, the image reception device 200 may perform decoding using a processing unit applied in the image encoding apparatus. Thus, the processing unit of decoding may be a coding unit, for example. The coding unit may be obtained by partitioning a coding tree unit or a largest coding unit. The reconstructed image signal decoded and output through the image reception device 200 may be reproduced through a reproducing apparatus (not shown).

The image reception device 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image reception device 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image source device 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image source device 100 may be equally or correspondingly applied to the filter 240, the inter prediction unit 260, and the intra prediction unit 265 of the image reception device 200.

**Color format (chroma format)**

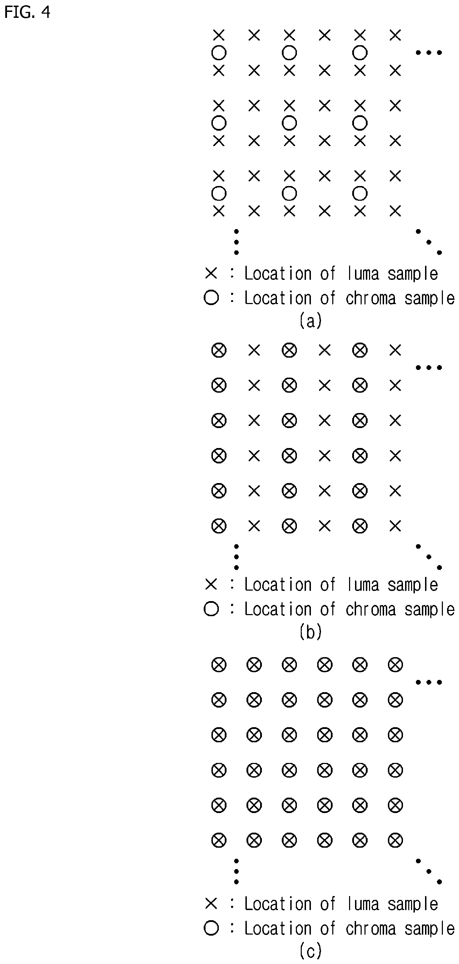

Hereinafter, a color format will be described. FIG. 4 is a diagram showing various examples of color formats. Specifically, (a) of FIG. 4 shows 4:2:0 (chroma format), (b) of FIG. 4 shows 4:2:2 (chroma format), and (c) of FIG. 4 shows 4:4:4 (chroma format).

A source or coded picture/image may include a luma component array, and in some cases, may further include two chroma component (cb, cr) arrays. That is, one pixel of a picture/image may include a luma sample and chroma samples (cb, cr).

The color format may represent a configuration format of a luma component and chroma components (cb, cr), and may also be called a chroma format. The color format (or chroma format) may be predetermined or adaptively signaled. For example, the chroma format may be signaled based on at least one of chroma_format_idc or separate_colour_plane_flag as shown in Table 1 below.

[Table 1]

| chroma_format_idc | separate_colour_plane_flag | Chroma format | SubWidthC | SubHeightC |
|---|---|---|---|---|
| 0 | 0 | Monochrome | 1 | 1 |
| 1 | 0 | 4:2:0 | 2 | 2 |
| 2 | 0 | 4:2:2 | 2 | 1 |

(continued)

| chroma_format_idc | separate_colour_plane_flag | Chroma format | SubWidthC | SubHeightC |
|---|---|---|---|---|
| 3 | 0 | 4:4:4 | 1 | 1 |
| 3 | 1 | 4:4:4 | 1 | 1 |

In monochrome sampling, there may be only one sample array that may be considered as a luma array. In 4:2:0 sampling, each of the two chroma arrays may have a height that is half the height of the luma array and a width that is half the width of the luma array. In 4:2:2 sampling, each of the two chroma arrays may have a height equal to the height of the luma array and a width that is half the width of the luma array. In 4:4:4 sampling, the height and width of the two chroma arrays may be determined based on the value of separate_color_plane_flag as follows.

**[0083]** - If the value of separate_colour_plane_flag is equal to 0, each of the two chroma arrays may have a height equal to the height of the luma array and a width equal to the width of the luma array.

**[0084]** - Otherwise (the value of separate_color_plane_flag is equal to 1), the three color planes may be processed separately as monochrome sampled pictures.

SubWidthC and SubHeightC may be a ratio between the luma sample and chroma sample. For example, if the value of chroma_format_idc is equal to 3, the chroma format may be 4:4:4. In this case, if the width of the luma sample block is 16, the width of the corresponding chroma sample block may be 16/SubWidthC. In general, chroma samples related syntax and bitstream may be parsed only if the value of chromaArrayType is not equal to 0.

**Picture reconstruction and in-loop filtering**

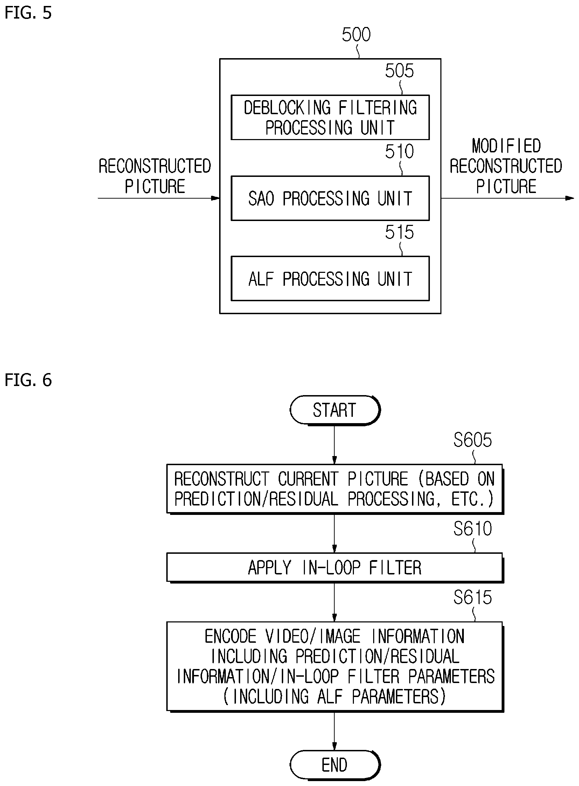

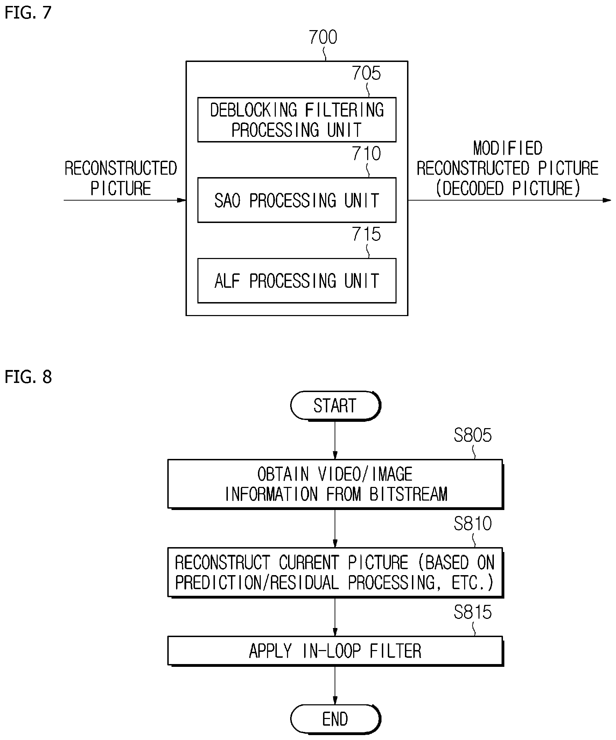

Hereinafter, picture reconstruction and (in-loop) filtering will be described. FIG. 5 shows filtering units 160 and 500 within the image encoding apparatus 100, and FIG. 6 shows an image/video encoding method based on in-loop filtering. In addition, FIG. 7 shows filtering units 240 and 700 in the image decoding apparatus 200, and FIG. 8 shows an image/video decoding method based on in-loop filtering. Data encoded by the filtering unit 500 of FIG. 5 and the encoding method of FIG. 6 may be stored in the form of a bitstream.

Picture reconstruction and in-loop filtering general

In image/video coding, pictures constituting the image/video may be encoded/decoded according to a series of decoding orders. The picture order corresponding to the output order of the decoded picture may be set differently from the decoding order, and based on this, not only forward prediction but also backward prediction may be performed during inter prediction.

The picture decoding procedure may include a picture reconstruction procedure and an in-loop filtering procedure for a reconstructed picture. Through the in-loop filtering procedure, a modified reconstructed picture may be generated, and the modified reconstructed picture may be output as a decoded picture. In addition, the output picture may be stored in the decoded picture buffer or memory 250 of the image decoding apparatus 200 and used as a reference picture in an inter prediction procedure when decoding a picture later. The in-loop filtering procedure may include a deblocking filtering procedure, a sample adaptive offset (SAO) procedure, an adaptive loop filter (ALF) procedure, and/or a bi-lateral filter procedure, etc., as described above. In addition, one or some of the deblocking filtering procedure, sample adaptive offset (SAO) procedure, adaptive loop filter (ALF) procedure, and bi-lateral filter procedure may be applied sequentially, or all of them may be applied sequentially. For example, the SAO procedure may be performed after a deblocking filtering procedure is applied to the reconstructed picture. Alternatively, for example, an ALF procedure may be performed after a deblocking filtering procedure is applied to the reconstructed picture. This may also be performed in the encoding apparatus as well.

The picture encoding procedure may roughly include not only a process of encoding information for picture reconstruction (e.g., partitioning information, prediction information, residual information, etc.) and outputting it in the form of a bitstream but also a process of generating a reconstructed picture for a current picture and applying in-loop filtering. In this case, a modified reconstructed picture may be generated through an in-loop filtering procedure, and may be stored in the decoded picture buffer or memory 170. In addition, as in the case of the image decoding apparatus 200, the stored picture may be used as a reference picture in an inter prediction procedure when encoding a picture later. When the in-loop filtering procedure is performed, (in-loop) filtering-related information (parameters) may be encoded in the entropy encoding unit 190 of the image encoding apparatus 100 and output in the form of a bitstream, and the image decoding apparatus 200 may perform an in-loop filtering procedure using the same method as the encoding apparatus, based on the filtering-related information.

Through such an in-loop filtering procedure, noise occurring during image/video coding, such as blocking artifact and ringing artifact, may be reduced and subjective/objective visual quality may be improved. In addition, by performing the in-loop filtering procedure in both the image encoding apparatus 100 and the image decoding apparatus 200, the image encoding apparatus 100 and the image decoding apparatus 200 may derive the same prediction result, picture coding reliability may be increased and the amount of data to be transmitted for picture coding may be reduced.

As illustrated in FIG. 5, the filtering unit 500 may be configured to include a deblocking filtering processing unit 505, an SAO processing unit 510, and/or an ALF processing unit 515. The in-loop filtering-based image/video encoding method performed by the image encoding apparatus 100 and the filtering unit 500 may be performed as follows.

The image encoding apparatus 100 may generate a reconstructed picture for a current picture (S605). As described above, the image encoding apparatus 100 may generate a reconstructed picture through procedures such as partitioning, intra/inter prediction, and residual processing for an input original picture. Specifically, the image encoding apparatus 100 may generate prediction samples for the current block through intra or inter prediction, generate residual samples based on the prediction samples, transform/quantize the residual samples, and then inverse quantize/inverse transform them, thereby deriving (modified) residual samples. The reason for performing inverse quantization/inverse transform again after transform/quantization is to derive residual samples that are identical to the residual samples derived from the image decoding apparatus 200, as described above. This is because the quantization procedure is basically a lossy coding procedure, and the transform procedure also has loss when RT (reduced transform) is applied. The image encoding apparatus 100 may generate a reconstructed block including reconstructed samples for the current block based on the prediction samples and the (modified) residual samples. In addition, the image encoding apparatus 100 may generate the reconstructed picture based on the reconstructed block.

The image encoding apparatus 100 may perform an in-loop filtering procedure on the reconstructed picture (S610). A modified reconstructed picture may be generated through the in-loop filtering procedure. The modified reconstructed picture may be stored in the decoded picture buffer or memory 170 as a decoded picture, and may be used as a reference picture in an inter prediction procedure when encoding a picture later. The in-loop filtering procedure may include a deblocking filtering procedure, a sample adaptive offset (SAO) procedure, and/or an adaptive loop filter (ALF) procedure. S610 may be performed by the filtering unit 500 of the image encoding apparatus 100. Specifically, for example, the deblocking filtering procedure may be performed by the deblocking filtering processing unit 505, the SAO procedure may be performed by the SAO processing unit 510, and the ALF procedure may be performed by the ALF processing unit 515. Some of the various filtering procedures may be omitted in consideration of image characteristics, complexity, efficiency, etc., and in this case, the related components of FIG. 5 may also be omitted.

The image encoding apparatus 100 may encode image information including information for picture reconstruction and (in-loop) filtering-related information, and output the encoded image information in the form of a bitstream (S615). The output bitstream may be forwarded to the image decoding apparatus 200 through a storage medium or network. S615 may be performed by the entropy encoding unit 190 of the image encoding apparatus 100. The information for picture reconstruction may include partitioning information, prediction information, residual information, etc. described above/described later. The filtering-related information may include, for example, flag information indicating whether to apply full in-loop filtering, flag information indicating whether to apply each filtering procedure, information about an SAO type, information about an SAO offset value, and information about an SAO band location, information about an ALF filtering shape, and/or information about an ALF filtering coefficient, etc. Meanwhile, when some filtering methods are omitted as described above, information (parameters) related to the omitted filtering may naturally be omitted.

As illustrated in FIG. 7, the filtering unit 700 may be configured to include a deblocking filtering processing unit 705, an SAO processing unit 710, and/or an ALF processing unit 715. The in-loop filtering-based image/video decoding method performed by the image decoding apparatus 200 and the filtering unit 700 may be performed as follows.

The image decoding apparatus 200 may perform operation corresponding to operation performed by the image encoding apparatus 100. The image decoding apparatus 200 may receive encoded image information in the form of a bitstream.

The image decoding apparatus 200 may obtain image information including information for picture reconstruction and (in-loop) filtering-related information from the received bitstream (S805). S805 may be performed by the entropy decoding unit 210 of the image decoding apparatus 200. The information for picture reconstruction may include partitioning information, prediction information, residual information, etc. described above/described later. The filtering-related information includes, for example, flag information indicating whether to apply full in-loop filtering, flag information indicating whether to apply each filtering procedure, information about an SAO type, information about an SAO offset value, and information about an SAO band location, information about an ALF filtering shape, information about an ALF filtering coefficient, information about a bilateral filter shape, and/or information about a bilateral filter weight, etc. Meanwhile, when some filtering methods are omitted as described above, information (parameters) related to the omitted filtering may naturally be omitted.

The image decoding apparatus 200 may generate a reconstructed picture for the current picture based on the information for picture reconstruction (S810). As described above, the image decoding apparatus 200 may generate a reconstructed picture through procedures such as intra/inter prediction and residual processing for the current picture. Specifically, the image decoding apparatus 200 may generate prediction samples for the current block through intra or inter prediction based on prediction information included in the information for picture reconstruction, and derive residual samples for the current block based on the residual information included in the information for picture reconstruction (based on inverse quantization/inverse transform). The image decoding apparatus 200 may generate a reconstructed block including reconstructed samples for the current block based on the prediction samples and the residual samples. In addition, the image decoding apparatus 200 may generate the reconstructed picture based on the reconstructed block.

The image decoding apparatus 200 may perform an in-loop filtering procedure on the reconstructed picture (S815). A modified reconstructed picture may be generated through the in-loop filtering procedure. The modified reconstructed picture may be stored in the decoded picture buffer or memory 170 as a decoded picture, and may be used as a reference picture in an inter prediction procedure when encoding a picture later. The in-loop filtering procedure may include a deblocking filtering procedure, a sample adaptive offset (SAO) procedure, and/or an adaptive loop filter (ALF) procedure. S815 may be performed by the filtering unit 700 of the image decoding apparatus 200. Specifically, for example, the deblocking filtering procedure may be performed by the deblocking filtering processing unit 705, the SAO procedure may be performed by the SAO processing unit 710, and the ALF procedure may be performed by the ALF processing unit 715. Some of the various filtering procedures may be omitted in consideration of image characteristics, complexity, efficiency, etc., and in this case, the related components of FIG. 7 may also be omitted.

Block/picture reconstruction

As described above, a picture reconstruction procedure may be performed in the image encoding apparatus 100 and the image decoding apparatus 200. In this case, a reconstructed block may be generated based on intra prediction/inter prediction for each block, and a reconstructed picture including the reconstructed blocks may be generated. When the current picture/slice is an I picture/slice, blocks included in the current picture/slice may be reconstructed based only on intra prediction. Meanwhile, when the current picture/slice is a P or B picture/slice, blocks included in the current picture/slice may be reconstructed based on intra prediction or inter prediction. In this case, intra prediction may be applied to some blocks in the current picture/slice, and inter prediction may be applied to the remaining blocks.

**In-loop filtering**

In-loop filtering general

An in-loop filtering procedure may be performed on the reconstructed picture generated through the above-described procedures. Through an in-loop filtering procedure, a modified reconstructed picture may be generated, and the image decoding apparatus 200 may output the modified reconstructed picture as a decoded picture. The image encoding apparatus 100/image decoding apparatus 200 may store the output picture in the decoded picture buffer or memory 170 or 250 and use it as a reference picture in an inter prediction procedure when encoding/decoding a picture later. As described above, the in-loop filtering procedure may include a deblocking filtering procedure, a sample adaptive offset (SAO) procedure, and/or an adaptive loop filter (ALF) procedure. In this case, one or some of the deblocking filtering procedure, sample adaptive offset (SAO) procedure, adaptive loop filter (ALF) procedure, and bi-lateral filter procedure may be applied sequentially, or all of them may be applied sequentially. For example, the SAO procedure may be performed after a deblocking filtering procedure is applied to the reconstructed picture. Alternatively, for example, an ALF procedure may be performed after a deblocking filtering procedure is applied to the reconstructed picture. This may be similarly performed in the image encoding apparatus 100.

Deblocking filtering is a filtering technique that removes distortion at a boundary between blocks in a reconstructed picture. The deblocking filtering procedure may, for example, derive a target boundary from a reconstructed picture, determine a boundary strength (bS) for the target boundary, and perform deblocking filtering on the target boundary based on the bS. The bS may be determined based on a prediction mode of two blocks adjacent to the target boundary, a motion vector difference, whether the reference picture is the same, the presence of a non-zero significant coefficient, etc.

SAO is a method of compensating for an offset difference between the reconstructed picture and the original picture in units of samples. For example, it may be applied based on types such as Band Offset and Edge Offset. According to SAO, samples may be classified into different categories according to each SAO type, and an offset value may be added to each sample based on the category. Filtering information for SAO may include information on whether SAO is applied, SAO type information, SAO offset value information, etc. SAO may be applied to the reconstructed picture after applying the deblocking filtering.

ALF (Adaptive Loop Filter) is a technique for filtering a reconstructed picture on a sample basis based on filter coefficients according to the filter shape. The image encoding apparatus 100 may determine whether to apply ALF, an ALF shape, and/or an ALF filtering coefficient, etc., through comparison of the reconstructed picture and the original picture, and signal this to the image decoding apparatus 200. That is, filtering information for ALF may include information about whether to apply ALF, ALF filter shape information, ALF filtering coefficient information, etc. ALF may be applied to the reconstructed picture after applying the deblocking filtering.

Overview of sample adaptive offset (SAO) filter

SAO (sample adaptive offset) may be applied using offsets for each CTB designated by the image encoding apparatus 100, and may be applied to the reconstructed signal after deblocking filtering. The image encoding apparatus 100 may first determine whether to apply the SAO process to the current slice. If SAO is applied to the current slice, each CTB may be classified as one of the five SAO types shown in Table 2 below.

[Table 2]

| SAO type | sample adaptive offset type to be used | Number of categories |
|----------|----------------------------------------|----------------------|
| 0 | None | 0 |
| 1 | 1-D 0-degree pattern edge offset | 4 |
| 2 | 1-D 90-degree pattern edge offset | 4 |
| 3 | 1-D 135-degree pattern edge offset | 4 |
| 4 | 1-D 45-degree pattern edge offset | 4 |
| 5 | band offset | 4 |

The concept of SAO may be to reduce distortion by classifying pixels into categories and adding an offset to the pixels of each category. SAO operations may include Edge Offset using edge properties for pixel classification of SAO Types 1 to 4 and Band Offset using pixel strength for pixel classification of SAO Type 5. Each applicable CTB may have SAO parameters including sao_merge_left_flag, sao_merge_up_flag, SAO type and four offsets. If the value of sao_merge_left_flag is equal to a first value (e.g., 1), SAO may be applied to the current CTB by reusing the SAO type and offsets of the left CTB. If the value of sao_merge_up_flag is equal to the first value (e.g., 1), SAO may be applied to the current CTB by reusing the SAO type and offsets of the upper CTB.

Operation of each SAO type

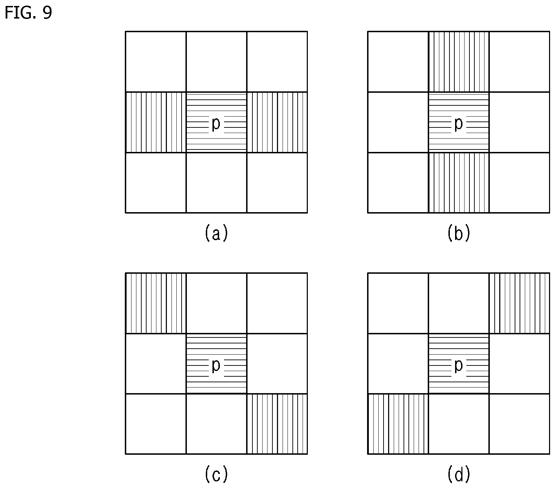

In an edge offset, four 1-D 3-pixel patterns for classification of the current pixel p may be used in consideration of edge direction information as illustrated in FIG. 9. Based on the direction from left to right, (a) of FIG. 9 shows a 0-degree 1-D 3-pixel pattern, (b) of FIG. 9 shows a 90-degree 1-D 3-pixel pattern, and (c) of FIG. 9 shows a 135-degree 1-D 3-pixel pattern, and (d) of FIG. 9 shows a 45-degree 1-D 3-pixel pattern.

Each CTB may be classified into one of five categories according to Table 3 below.

[Table 3]

| Category | Condition | Meaning |
|----------|-----------|---------|
| 0 | None of the below | Largely monotonic |
| 1 | p < 2 neighbours | Local minimum |
| 2 | p < 1 neighbour && p == 1 neighbour | Edge |
| 3 | p > 1 neighbour && p == 1 neighbour | Edge |
| 4 | p > 2 neighbours | Local maximum |

Referring to Table 3, if the value of the current pixel p is greater than the value of the neighboring pixels (Local maximum), it may be classified as Category 4, and if the value of the current pixel p is larger than the value of any one of the neighboring pixels and is equal to the value of another pixel (Edge), it may be classified as Category 3. In addition, if the value of the current pixel p is smaller than the value of any one of the neighboring pixels and is equal to the value of another pixel (Edge), it may be classified as Category 2, and if the value of the current pixel p is smaller than the value of the neighboring pixels (Local minimum), it may be classified as Category 1.

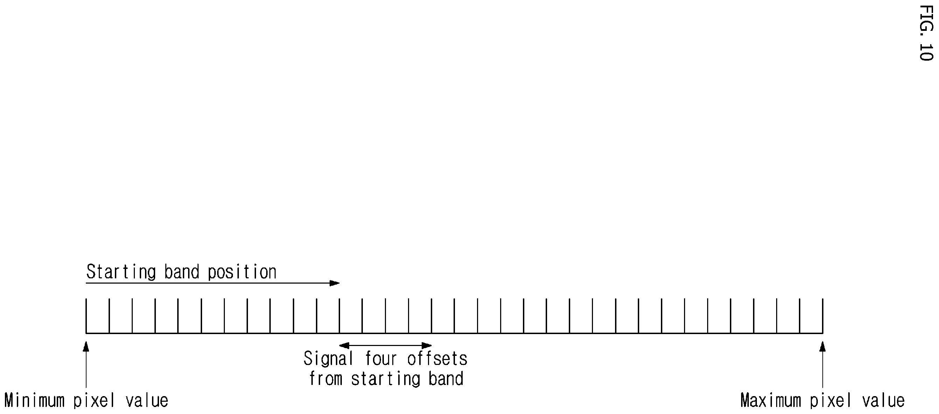

In a band offset, all pixels within one CTB area may be classified into 32 single bands by using the five most significant bits of the pixel value as a band index. That is, the pixel strength range may be divided into 32 equal segments ranging from 0 to a maximum strength value (e.g., 255 for an 8-bit pixel). Four adjacent bands are grouped together, and each group may be indicated by its leftmost location, as illustrated in FIG. 10. The image encoding apparatus 100 may obtain a maximum distortion reduction group by searching all locations and compensating for the offset of each band.

**CC-SAO (cross-component sample adaptive offset) filter**

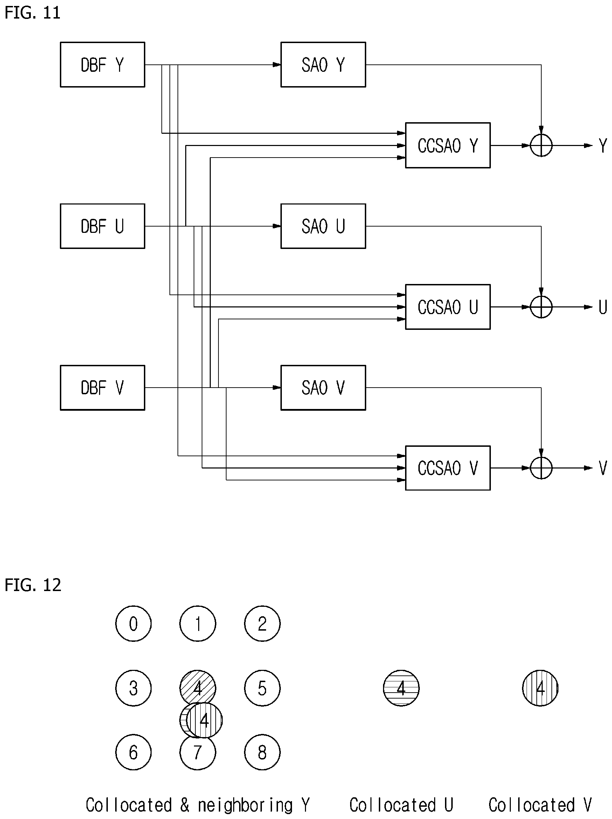

The CC-SAO coding tool was proposed to improve compression efficiency. An example of the decoding process of the CC-SAO is shown in FIG. 11. In the CC-SAO, similar to SAO, reconstructed samples may be classified into different categories, one offset may be derived for each category, and the derived offsets may be added to the reconstructed samples of the category. However, unlike SAO, which uses only a single luma/chroma component of the current sample as input, as illustrated in FIG. 11, the CC-SAO uses all three components so that the current sample may be classified into different categories. To facilitate parallel processing, the output samples of the deblocking filter may be used as input to the CC-SAO.

In CC-SAO design, only the band offset may be used to improve the quality of reconstructed samples, to achieve a better complexity/performance trade-off. For a luma/chroma sample, three candidate samples may be selected to classify the sample into different categories. The three candidate samples may be one collocated Y sample, one collocated U sample, and one collocated V sample. The sample values of these three selected samples may be classified into three different bands {bandY, bandU, bandV}. Joint index i may be used to indicate the category of the sample. One offset may be signaled and may be added to the reconstructed samples belonging to the category. Classification into different bands {bandY, bandU, bandV}, derivation of joint index i, and summation of offsets may be expressed as Equation 1 below.

[Equation 1]

$$band_Y = (Y_{col} \cdot N_Y) \gg BD$$
$$band_U = (U_{col} \cdot N_U) \gg BD$$
$$band_V = (V_{col} \cdot N_V) \gg BD$$
$$i = band_Y \cdot (N_U \cdot N_V) + band_U \cdot N_V + band_V$$
$$C'_{rec} = Clip1(C_{rec} + \sigma_{CCSAO}[i])$$

In Equation 1, {$Y_{col}$, $U_{col}$, $V_{col}$} may represent three selected collocated samples, and the three selected collocated samples may be used to classify the current sample. {$N_Y$, Nu, Nv} may represent the number of equally divided bands applied to the entire range of {$Y_{col}$, $U_{col}$, $V_{col}$}, and BD may represent an internal coding bit depth. $C_{rec}$ may represent reconstructed samples before the CC-SAO is applied, and $C'_{rec}$ may represent reconstructed samples after the CC-SAO is applied. ($\sigma_{CCSAO}$ [$i$] may represent the value of the CC-SAO offset applied to an i-th band offset (BO) category.

As illustrated in FIG. 12, in the current CC-SAO design, the collocated luma sample (e.g., 4 of Collocated & neighboring Y) is selected from 9 candidate locations (e.g., 0 to 8 of Collocated & neighboring Y) and the locations of collocated chroma samples (e.g., 4 of Collocated U and Collocated V) may be fixed.

Similar to SAO, different classifiers may be applied to different local regions to improve the quality of the overall picture. The parameters of each classifier (e.g., location of $Y_{col}$, $N_Y$, $N_U$, Nv and offsets) may be signaled at a frame level. Which classifier is used may be explicitly signaled, and the classifier to be used may be switched at a CTB level. For each classifier, the maximum value of {$N_Y$, $N_U$, Nv} may be set to {16, 4, 4}, and offsets may be limited to range within [-15, 15]. The maximum classifier per frame may be limited to 4.

**Problems of the Related Art**

In CC-SAO described above, CC-SAO filtering may be performed on the premise of 4:2:0 chroma format. In other words, it can be said that the conventional CC-SAO is optimized for the 4:2:0 chroma format.

As illustrated in (a) of FIG. 4, in the 4:2:0 chroma format, one chrominance pixel (chroma sample) may correspond to four luminance pixels (luma samples). That is, in the 4:2:0 chroma format, one chroma sample is adjacent to two neighboring luma samples, and CC-SAO filtering may be performed using one of nine neighboring luma samples corresponding to the current chroma sample.

In addition to the 4:2:0 color format, a 4:2:2 chroma format and a 4:4:4 chroma format may also exist, as illustrated in (b) of FIG. 4 and (c) of FIG. 4. In the 4:2:2 chroma format and 4:4:4 chroma format, since the distribution location and number of chroma samples and the neighboring luma samples corresponding thereto are different from those of the 4:2:0 chroma format, if the CC-SAO method optimized for the 4:2:0 chroma format is applied without change, a problem may occur that reduces algorithm efficiency.

## Embodiment

Embodiments according to the present disclosure propose methods of efficiently applying a CC-SAO according to various color formats (chroma formats) and various chroma sample types in order to solve problems of the conventional CC-SAO. That is, embodiments of the present disclosure propose methods of applying a CC-SAO in various chroma formats and at various chroma sample locations.

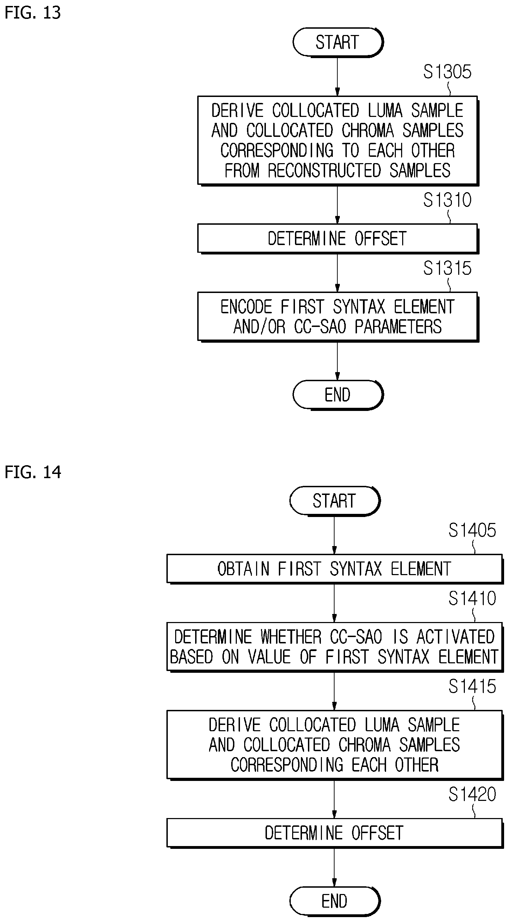

FIG. 13 is a flowchart illustrating an image encoding method according to an embodiment of the present disclosure, and FIG. 14 is a flowchart illustrating an image decoding method according to an embodiment of the present disclosure.

Referring to FIG. 13, the image encoding apparatus 100 may derive a collocated luma sample and collocated chroma samples from reconstructed samples based on the chroma format of the reconstructed samples (S1305). The collocated luma sample and the collocated chroma samples may correspond to each other. The collocated luma sample may be a collocated Y sample, and the collocated chroma sample may be a collocated U sample and a collocated V sample. The reconstructed samples may be modified reconstructed samples to which deblocking filtering has been applied.

The image encoding apparatus 100 may determine an offset based on the collocated luma sample and the collocated chroma samples (S1310). The offset may be an offset to be used for the CC-SAO (CC-SAO offset). That is, the offset may be an offset to be applied to the reconstructed samples.

The image encoding apparatus 100 may perform the CC-SAO using the offset. Specifically, the image encoding apparatus 100 may output reconstructed samples to which CC-SAO has been applied (modified reconstructed samples) by adding the offset determined in step S1310 to the values of the reconstructed samples. The image encoding apparatus 100 may encode parameters related to CC-SAO performance (CC-SAO parameters) in the form of a bitstream m (S1315). In some embodiments, the image encoding apparatus 100 may encode a first syntax element in the form of a bitstream (S1315). The first syntax element (e.g., sps_sao_enabled_flag) may specify whether the CC-SAO is activated. For example, if the value of the first syntax element is equal to a first value (e.g., 1), this may specify that the CC-SAO is activated. As another example, when the value of the first syntax element is equal to a second value (e.g., 0), this may specify that the CC-SAO is not activated.

Referring to FIG. 14, the image decoding apparatus 200 may derive collocated luma sample and collocated chroma samples from the restored samples based on the chroma format of the reconstructed samples (S1415). As described above, the collocated luma sample and the collocated chroma samples may correspond to each other, and the reconstructed samples may be modified reconstructed samples to which deblocking filtering has been applied.

The image decoding apparatus 200 may determine an offset based on the collocated luma sample and the collocated chroma samples (S1420). The offset may be an offset to be used for CC-SAO (CC-SAO offset). That is, the offset may be an offset to be applied to the reconstructed samples.

The image decoding apparatus 200 may perform the CC-SAO using the offset and/or CC-SAO parameters. Specifically, the image decoding apparatus 200 may output reconstructed samples to which CC-SAO has been applied (modified reconstructed samples) by adding the offset determined in step S1420 to the values of the reconstructed samples.

In some embodiments, the image decoding apparatus 200 obtains a first syntax element (e.g., sps_sao_enabled_flag) from a bitstream (S1405) and determines whether the CC-SAO is activated based on the value of the first syntax element. (S1410). For example, if the value of the first syntax element is equal to a first value (e.g., 1), this may specify that the CC-SAO is activated. In this case, the image decoding apparatus 200 determines that CC-SAO is activated and may perform the CC-SAO by performing the steps after step S1415. As another example, when the value of the first syntax element is equal to a second value (e.g., 0), this may specify that the CC-SAO is not activated. In this case, the image decoding apparatus 200 determines that the CC-SAO is not activated and may not perform the processes after step S1415.

Hereinafter, embodiments of the present disclosure will be described.

## Embodiment 1

Embodiment 1 is an embodiment of the process of deriving the collocated luma sample (S1305, S1415).

As described above, in the 4:2:0 chroma format, the locations of chroma samples and the location of the luma sample corresponding thereto do not match. Therefore, in the conventional CC-SAO, one of the nine neighboring luma samples (candidate luma samples) collocated with chroma samples is used in CC-SAO, and information on the luma sample (collocated luma sample) used in the CC-SAO is transmitted to the image decoding apparatus 200.

Therefore, according to the conventional CC-SAO, in order to select a luma sample (collocated luma sample) to be used for CC-SAO among the 9 candidate luma samples, since all 9 candidate luma samples shall be tested (CC-SAO test), the complexity of the image encoding apparatus 100 increases. In addition, according to the conventional CC-SAO, since information about collocated luma samples for each CTU shall be transmitted to the image decoding apparatus 200, the filter information of the CC-SAO transmitted to the image decoding apparatus 200 increases.

Embodiment 1 may correspond to a method of performing CC-SAO using only one luma sample at a fixed location or performing CC-SAO using one luma sample value. Therefore, according to Embodiment 1, the complexity of the image encoding apparatus 100 can be improved because the CC-SAO test does not need to be performed, and compression efficiency can be improved because information about collocated luma sample the does not need to be transmitted.

Embodiment 1 may be divided into the following embodiments.

Embodiment 1-1

Embodiment 1-1 is an embodiment optimized for the 4:4:4 chroma format.

Due to the nature of CC-SAO, which uses the high correlation between the luma sample and chroma samples, using luma samples that match chroma samples 1:1 can improve prediction accuracy. However, the conventional CC-SAO is optimized for the 4:2:0 chroma format and neighboring luma samples are used in addition to luma sample that matches chroma samples 1:1, so prediction accuracy may be reduced.

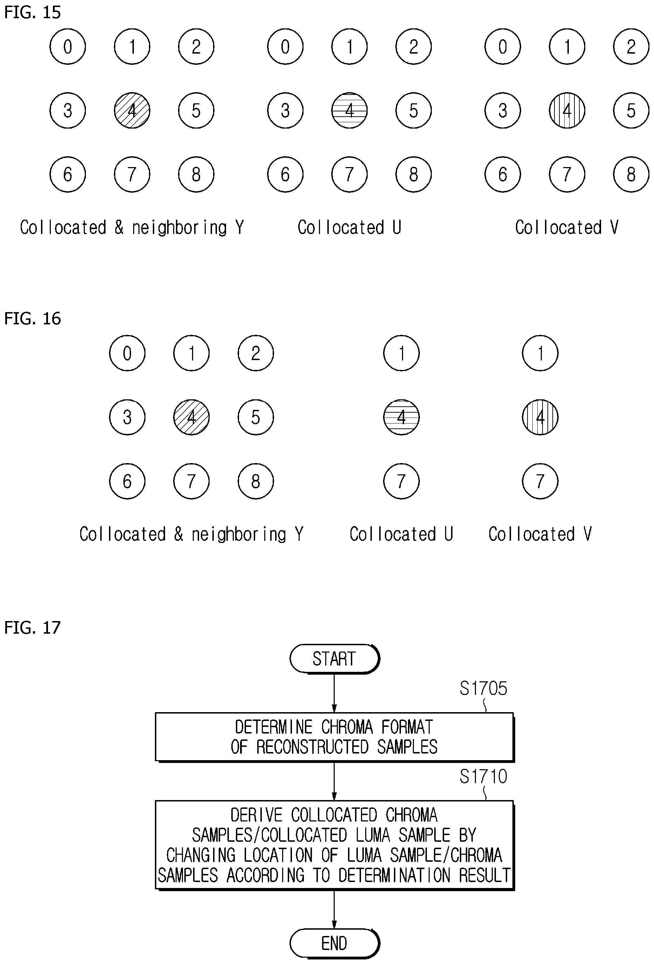

As illustrated in FIG. 15, in the 4:4:4 chroma format, unlike the 4:2:0 chroma format, the luma sample (e.g., 4 of Collocated & neighboring Y) and chroma samples (e.g., 4 of Collocated U and 4 of Collocated V) match each other 1:1. That is, in the 4:4:4 chroma format, the locations of chroma samples and the location of the luma sample corresponding thereto match.

Accordingly, if the luma sample located at the same location as the collocated chroma samples is derived as the collocated luma sample, not only can the complexity of the image encoding apparatus 100 be improved and compression efficiency improved, but prediction accuracy can also be improved.

Based on the chroma format of the reconstructed samples being a 4:4:4 chroma format, the image encoding apparatus 100 may derive the luma sample located at the same location as collocated chroma samples as the collocated luma sample. In this case, CC-SAO test on candidate luma samples may not be performed, and information about the collocated luma sample may not be transmitted.

Based on the chroma format of the reconstructed samples being a 4:4:4 chroma format, the image decoding apparatus 200 may derive the luma sample located at the same location as the collocated chroma samples as the collocated luma sample.

Embodiment 1-2

Embodiment 1-2 is an embodiment of selecting one luma sample located at a fixed location among candidate luma samples as a collocated luma sample. The method of Embodiment 1-2 is applicable not only to the 4:4:4 chroma format but also to the 4:2:2 chroma format and 4:2:0 chroma format.

The image encoding apparatus 100 may derive a luma sample located at a predetermined location among candidate luma samples as a collocated luma sample, based on the chroma format of the reconstructed samples being a predetermined chroma format. Here, the candidate luma samples may be luma samples located nearby from the locations of the collocated chroma samples. The predetermined chroma format may be one or more of the 4:4:4 chroma format, 4:2:2 chroma format, and 4:2:0 chroma format. For example, the predetermined chroma format may be a 4:2:2 chroma format or a 4:2:0 chroma format.

For example, as illustrated in FIG. 16, a luma sample (e.g., 4 of Collocated & neighboring Y) located at a predetermined location among candidate luma samples (e.g., 0 to 8 of Collocated & neighboring Y) located around collocated chroma samples (e.g., 4 of Collocated U and Collocated V) may be derived as a collocated luma sample.

The image decoding apparatus 200 may derive a luma sample located at a predetermined location among candidate luma samples as a collocated luma sample, based on the chroma format of the reconstructed samples being a predetermined chroma format. Here, the candidate luma samples may be luma samples located nearby from the locations of the collocated chroma samples. The predetermined chroma format may be one or more of the 4:4:4 chroma format, 4:2:2 chroma format, and 4:2:0 chroma format. For example, the predetermined chroma format may be a 4:2:2 chroma format or a 4:2:0 chroma format.

For example, as illustrated in FIG. 16, a luma sample (e.g., 4 of Collocated & neighboring Y) located at a predetermined location among candidate luma samples (e.g., 0 to 8 of Collocated & neighboring Y) located around collocated chroma samples (e.g., 4 of Collocated U and Collocated V) may be derived as a collocated luma sample.

Embodiment 1-3

Embodiment 1-3 is an embodiment of filtering (or filtering calculation) all or some of candidate luma samples, calculating one luma sample value, and performing CC-SAO using one luma sample value as the value of the collocated luma sample. The method of Embodiment 1-3 is applicable not only to the 4:4:4 chroma format but also to the 4:2:2 chroma format and 4:2:0 chroma format.

One luma sample value may be derived through average calculation of all or some of the values of candidate luma samples. That is, the image encoding apparatus 100 and the image decoding apparatus 200 may derive one luma sample value from all or some of the values of candidate luma samples. For example, in the example of FIG. 16, when luma sample 4 is selected as the luma sample to be used in CC-SAO, 'one luma sample value' may be derived using any one of Equations 2 to 7 below.

[Equation 2]

$$Y_{out} = (4 * Y_4 + Y_1 + Y_3 + Y_5 + Y_7) \gg 3$$

[Equation 3]

$$Y_{out} = (Y_0 + Y_1 + Y_2 + Y_3 + Y_4 + Y_5 + Y_6 + Y_7) \gg 3$$

[Equation 4]

$$Y_{out} = (2 * Y_4 + 2 * Y_7 + Y_3 + Y_5 + Y_6 + Y_8) \gg 3$$

[Equation 5]

$$Y_{out} = (2 * Y_4 + 2 * Y_5 + Y_1 + Y_2 + Y_7 + Y_8) \gg 3$$

[Equation 6]

$$Y_{out} = (2 * Y_4 + Y_3 + Y_5) \gg 2$$

[Equation 7]

$$Y_{out} = (Y_4 + Y_5 + Y_7 + Y_8) \gg 2$$

Equation 2 shows a method of deriving one luma sample value using the values of candidate luma samples 4, 1, 3, 5, and 7, and Equation 3 shows a method of deriving one luma sample value using the values of candidate luma samples 0 to 7. In addition, Equation 4 shows a method of deriving one luma sample value using the values of candidate luma samples 4, 7, 3, 5, 6, and 8, and Equation 5 shows a method of deriving one luma sample value using the values of candidate luma samples 4, 5, 1, 2, 7, and 8. In addition, Equation 6 shows a method of deriving one luma sample value using the values of candidate luma samples 4, 3, and 5, and Equation 7 shows a method of deriving one luma sample value using the values of candidate luma samples 4, 5, 7, and 8. In Equations 2 to 7, $Y_{out}$ represents a luma sample value (one luma sample value) to be applied to CC-SAO, and $Y_0$ to $Y_7$ may represent the luma sample at the corresponding number location illustrated in FIG. 16.

**Embodiment 2**

Embodiment 2 is an embodiment of the process of deriving the collocated luma sample (S 1305, S 1415).

Specifically, Embodiment 2 is an embodiment of deriving a collocated luma sample from less than 9 candidate luma samples. The method of Embodiment 2 is applicable not only to the 4:4:4 chroma format but also to the 4:2:2 chroma format and 4:2:0 chroma format.

Therefore, according to the conventional CC-SAO, in order to select a luma sample (collocated luma sample) to be used for CC-SAO among the 9 candidate luma samples, since all 9 candidate luma samples shall be tested (CC-SAO test), the complexity of the image encoding apparatus 100 increases. In addition, according to the conventional CC-SAO, since information about collocated luma samples for each CTU shall be transmitted to the image decoding apparatus 200, the filter information of CC-SAO transmitted to the image decoding apparatus 200 increases.

Embodiment 2 may correspond to a method of performing CC-SAO using less than 9 candidate luma samples. Therefore, according to Embodiment 2, the complexity of the image encoding apparatus 100 can be improved because the number of candidate luma samples on which the CC-SAO test is performed, and compression efficiency can be improved because the amount of location information of candidate luma samples is reduced.

Embodiment 2 may be divided into the following embodiments.

Embodiment 2-1

The image encoding apparatus 100 may determine the chroma format of the reconstructed samples. For example, the image encoding apparatus 100 may determine whether the chroma format of the reconstructed samples is a predetermined chroma format. The predetermined chroma format may include one or more of a 4:4:4 chroma format, a 4:2:2 chroma format, and/or a 4:2:0 chroma format.

The image encoding apparatus 100 may derive a collocated luma sample from less than 9 candidate luma samples based on the chroma format of the reconstructed samples being a predetermined chroma format. Here, less than 9 candidate luma samples may be selected from luma samples located nearby from the locations of the collocated chroma samples. For example, less than 9 candidate luma samples may be selected 3 candidate luma samples (e.g., 3, 4, and 5 or 1, 4, and 7 of FIG. 16) located nearby from the locations of the collocated chroma samples. As another example, less than 9 candidate luma samples may be 5 candidate luma samples (e.g., 1, 3, 4, 5, and 7 of FIG. 16) located nearby from the locations of the collocated chroma samples. As another example, less than 9 candidate luma samples are 6 candidate luma samples (e.g., 3 to 8 of FIG. 16 or 1, 2, 4, 5, 7 and 8 of FIG. 16) located nearby from the locations of the collocated chroma samples. As another example, less than 9 candidate luma samples are 4 candidate luma samples (e.g., 3 to 8 or 4, 5, 7, and 8 of FIG. 16) located nearby from the locations of the collocated chroma samples.

The image decoding apparatus 200 may determine the chroma format of the reconstructed samples. For example, the image decoding apparatus 200 may determine whether the chroma format of the reconstructed samples is a predetermined chroma format. The predetermined chroma format may include one or more of a 4:4:4 chroma format, a 4:2:2 chroma format, and/or a 4:2:0 chroma format.

The image decoding apparatus 200 may derive a collocated luma sample from less than 9 candidate luma samples based on the chroma format of the reconstructed samples being a predetermined chroma format. Here, less than 9 candidate luma samples may be selected from luma samples located nearby from the locations of the collocated chroma samples. Examples of less than 9 candidate luma samples may be the same as examples of the image encoding apparatus 100.

Embodiment 2-2

Embodiments 2-2 is an embodiment of filtering (or filtering calculation) all or some of candidate luma samples, calculating one luma sample value, and performing CC-SAO using the calculated luma sample value as the value of the collocated luma sample. Here, the number of candidate luma samples may be less than 9. The method of Embodiment 2-2 is applicable not only to the 4:4:4 chroma format but also to the 4:2:2 chroma format and 4:2:0 chroma format.

One luma sample value may be derived through average calculation of all or some of the values of less than 9 candidate luma samples. That is, the image encoding apparatus 100 and the image decoding apparatus 200 may derive one luma sample value from all or some of the values of less than 9 candidate luma samples. For example, in the example of FIG. 16, when luma sample 4 is selected as the luma sample to be used in CC-SAO, 'one luma sample value' may be derived using any one of Equations 8 to 12 below.

[Equation 8]

$$Y_{out} = (4 * Y_4 + Y_1 + Y_3 + Y_5 + Y_7) \gg 3$$

[Equation 9]

$$Y_{out} = (Y_0 + Y_1 + Y_2 + Y_3 + Y_4 + Y_5 + Y_6 + Y_7) \gg 3$$

[Equation 10]

$$Y_{out} = (2 * Y_4 + 2 * Y_7 + Y_3 + Y_5 + Y_6 + Y_8) \gg 3$$

[Equation 11]

$$Y_{out} = (2 * Y_4 + Y_3 + Y_5) \gg 2$$

[Equation 12]

$$Y_{out} = (8 * Y_4 + Y_1 + 3 * Y_3 + 3 * Y_5 + Y_7) \gg 4$$

Equation 8 shows a method of deriving one luma sample value using the values of five candidate luma samples (4, 1, 3, 5, and 7), and Equation 9 shows a method of deriving one luma sample value using 8 candidate luma samples (0 to 7). In addition, Equation 10 shows a method of deriving one luma sample value using the values of six candidate luma samples (4, 7, 3, 5, 6 and 8), and Equation 11 shows a method of deriving one luma sample value using the values of three candidate luma samples (4, 3, and 5). In addition, Equation 12 shows a method of deriving one luma sample value using the values of five candidate luma samples (4, 1, 3, 5 and 7). In Equations 8 to 12, $Y_{out}$ represents the luma sample value (one luma sample value) to be applied to CC-SAO, and $Y_0$ to $Y_7$ may represent the (candidate) luma sample at the corresponding number location illustrated in FIG. 16.

**Embodiment 3**

Embodiment 3 includes an embodiment of appropriately setting the coordinates of the luma sample and chroma samples when applying CC-SAO to the 4:2:2 chroma format and 4:4:4 chroma format (Embodiment 3-1), and an embodiment (Embodiment 3-2) of determining whether to signal a first syntax element (e.g., sps_sao_enabled _flag) according to the chroma format.

Embodiment 3-1

Since conventional CC-SAO is limited to the 4:2:0 chroma format, when applying the CC-SAO algorithm as shown in Table 4 below, it is assumed that the luma image is 4 times the chroma image (2 times horizontal x 2 times vertical).

[Table 4]

```
case COMPONENT Y:
{
for (int y = 0; y < height; y++)
{
for (int x = 0; x < width; x++)
{
const Pel *colY = srcY + x + srcStrideY * candPosYY + candPosYX;
const Pel *colU = srcU + (x >> 1);
const Pel *colV = srcV + (x >> 1);

const int bandY = (*colY * bandNumY) >> bitDepth;
const int bandU = (*colU * bandNumU) >> bitDepth;
const int bandV = (*colV * bandNumV) >> bitDepth;
```

(continued)

```
const int bandIdx = bandY * bandNumU * bandNumV
+ bandU * bandNumV
+ bandV;
const int classIdx = bandIdx;

dst[x] = ClipPel<int>(dst[x] + offset[classIdx], clpRng);
}

srcY += srcStrideY;
srcU += srcStrideU * (y & 0x1);
srcV += srcStrideV * (y & 0x1);
dst += dstStride;
}
}
break;
case COMPONENT_Cb:
case COMPONENT_Cr:
{
for (int y = 0; y < height; y++)
{
for (int x = 0; x < width; x++)
{
const Pel *colY = srcY + (x << 1) + srcStrideY * candPosYY + candPosYX;
const Pel *colU = srcU + x;
const Pel *colV = srcV + x;

const int bandY = (*colY * bandNumY) >> bitDepth;
const int bandU = (*colU * bandNumU) >> bitDepth;
const int bandV = (*colV * bandNumV) >> bitDepth;
const int bandIdx = bandY * bandNumU * bandNumV
+ bandU * bandNumV
+ bandV;
const int classIdx = bandIdx;

dst[x] = ClipPel<int>(dst[x] + offset[classIdx], clpRng);
}

srcY += srcStrideY << 1;
srcU += srcStrideU;
srcV += srcStrideV;
dst += dstStride;
}
}
break;
```

In Table 4, COMPONENT_Y, COMPONENT_Cb, and COMPONENT_Cr represent the application of CC-SAO to each Y/Cb/Cr image, and (x,y) represents the coordinates of the block to which CC-SAO will be applied. colU and colV indicate the locations of the chroma samples, and colY indicates the location of the luma sample. The location of the luma sample may be selected from 9 candidate luma samples, and candPosYY and candPosYX represent the coordinates of the selected luma sample. bandNumY, bandNumU, and bandNumV represent the number of bands of each YUV for setting the band offset. Using the current YUV sample value, the band to which each YUV belongs may be calculated as bandY, bandU, and bandV, and the integrated class index may be calculated through bandIdx. The pixel value dst[x] to which CC-SAO is applied may be determined by adding an offset appropriate for classIdx to the dst[x] value, which is the pixel value before CC-SAO filtering.

As shown in Table 4, the conventional CC-SAO algorithm always fixes the chroma image to be half of the luma image. When this conventional CC-SAO algorithm is applied to a 4:2:2 chroma format in which the luma image is twice the chroma image (2 times horizontal x 1 time vertical) and a 4:4:4 chroma format in which the luma image is 1 time the chroma image (one time horizontal x one time vertical), an algorithm error will occur. Embodiment 3-1 may correspond to an embodiment in which errors in the CC-SAO algorithm do not occur in the 4:2:2 chroma format and 4:4:4 chroma format by modifying the CC-SAO algorithm.

The CC-SAO algorithm proposed through Embodiment 3-1 is shown in Table 5 below.

[Table 5]

```
Const int shift_x = sps_chroma_format_idc == 3 ? 0 : 1;
Const int shift_y = sps_chroma_format_idc >= 2 ? 0 : 1;
case COMPONENT Y:
{
for (int y = 0; y < height; y++)
{
for (int x = 0; x < width; x++)
{
const Pel *colY = srcY + x + srcStrideY * candPosYY + candPosYX;
const Pel *colU = srcU + (x >> shift_x);
const Pel *colV = srcV + (x >> shift_x);
const int bandY = (*colY * bandNumY) >> bitDepth;
const int bandU = (*colU * bandNumU) >> bitDepth;
const int bandV = (*colV * bandNumV) >> bitDepth;
const int bandIdx = bandY * bandNumU * bandNumV
+ bandU * bandNumV
+ bandV;
const int classIdx = bandIdx;
dst[x] = ClipPel<int>(dst[x] + offset[classIdx], clpRng);
}
srcY += srcStrideY;
srcU += srcStrideU * (shift_y ? (y & 0x1) : 1);
srcV += srcStrideV * (shift_y ? (y & 0x1) : 1);
dst += dstStride;
}
}
break;
case COMPONENT_Cb:
case COMPONENT_Cr:
{
for (int y = 0; y < height; y++)
{
for (int x = 0; x < width; x++)
{
const Pel *colY = srcY + (x << shift_x) + srcStrideY * candPosYY + candPosYX;
const Pel *colU = srcU + x;
const Pel *colV = srcV + x;
const int bandY = (*colY * bandNumY) >> bitDepth;
const int bandU = (*colU * bandNumU) >> bitDepth;
const int bandV = (*colV * bandNumV) >> bitDepth;
const int bandIdx = bandY * bandNumU * bandNumV
```

(continued)

```
+ bandU * bandNumV
+ bandV;
const int classIdx = bandIdx;
dst[x] = ClipPel<int>(dst[x] + offset[classIdx], clpRng);
}
srcY += srcStrideY << shift_y;
srcU += srcStrideU;
srcV += srcStrideV;
dst += dstStride;
}
}
break;
```

As shown in Table 5, in the CC-SAO algorithm proposed in Embodiment 3-1, when a chroma format is 4:2:2 (sps_chroma_format_idc == 2) or 4:4:4 (sps_chroma_format_idc == 2), after setting whether to perform a coordinate shift (whether to move the location or not) (shift_x, shift_y), this is applicable to the CC-SAO algorithm. By these features, CC-SAO may be performed without algorithm errors in the 4:2:2 chroma format and 4:4:4 chroma format.

Referring to FIG. 17, the image encoding apparatus 100 and the image decoding apparatus 200 may determine the chroma format of the reconstructed samples (S1705). The process S 1705 is Const int shift x = sps_chroma_formatidc == 3 ? and Const int shift_y = sps_chroma_format_idc >= 2 ? of Table 5.

The image encoding apparatus 100 and the image decoding apparatus 200 may change the locations of the luma sample or chroma samples based on the determination result of the process S 1705 to derive collocated luma sample or collocated chroma samples. For example, the image encoding apparatus 100 and the image decoding apparatus 200 may set the values of the location shift variables (shift_x, shift_y) of the luma samples or chroma samples based on the determination result of the process S 1705 (Const int shift_x = sps_chroma_format_idc == 3 ? 0:1 and Const int shift_y = sps_chroma_format_idc >= 2 ? 0:1 of Table 5). In addition, the image encoding apparatus 100 and the image decoding apparatus 200 may derive the collocated luma sample by changing the locations of the luma samples based on the values of the location shift variables (shift_x, shift_y), and may change the locations of the collocated chroma samples by changing the locations of the chroma samples.

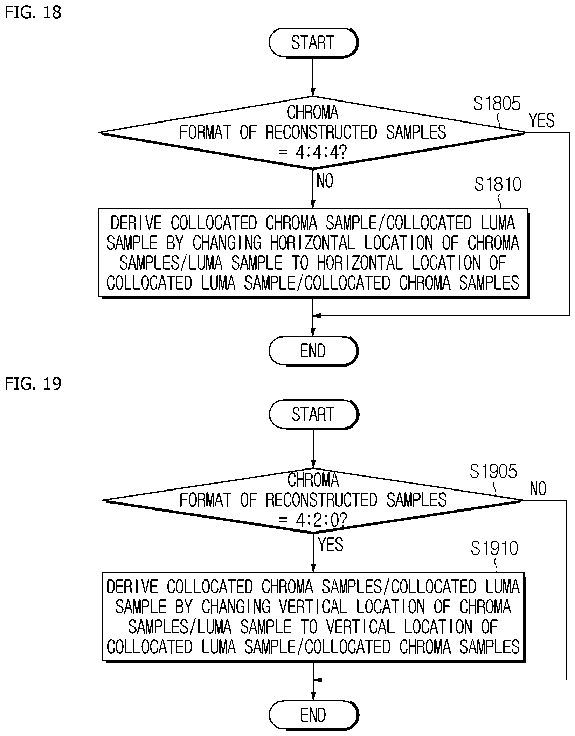

In some embodiments, referring to FIG. 18, the image encoding apparatus 100 and the image decoding apparatus 200 may determine the chroma format of the reconstructed samples (S 1805). In addition, the image encoding apparatus 100 and the image decoding apparatus 200 may derive the collocated chroma samples by changing the horizontal locations of the chroma samples to the horizontal location of the collocated luma sample (x >> shift_x in Table 5), based on the chroma format of the reconstructed samples not being a 4:4:4 chroma format (NO in S1805) (S1810).

In some embodiments, referring to FIG. 18, the image encoding apparatus 100 and the image decoding apparatus 200 may determine the chroma format of the reconstructed samples (S 1805). In addition, the image encoding apparatus 100 and the image decoding apparatus 200 may derive collocated chroma samples by changing the horizontal locations of the luma sample to the horizontal location of the collocated chroma samples (x << shift_x in Table 5), based on the chroma format of the reconstructed samples not being a 4:4:4 chroma format (NO in S 1805) (S 1810).

In some embodiments, referring to FIG. 19, the image encoding apparatus 100 and the image decoding apparatus 200 may determine the chroma format of the reconstructed samples (S 1905). In addition, the image encoding apparatus 100 and the image decoding apparatus 200 may derive collocated chroma samples by changing the vertical location of the chroma samples to the vertical location of the collocated luma sample (shift_y ? (y & 0x1) : 1 in Table 5), based on the chroma format of the reconstructed samples being a 4:2:0 chroma format (YES of S 1905) (S1910).

In some embodiments, referring to FIG. 19, the image encoding apparatus 100 and the image decoding apparatus 200 may determine the chroma format of the reconstructed samples (S 1905). In addition, the image encoding apparatus 100 and the image decoding apparatus 200 may derive collocated luma samples by changing the vertical location of the luma sample to the vertical location of the collocated chroma samples (<< shift_y in Table 5), based on the chroma format of the reconstructed samples being a 4:2:0 chroma format (YES of S1905) (S1910).

Embodiment 3-2

Embodiment 3-2 may correspond to an embodiment of determining whether to activate CC-SAO based on the chroma format.

Due to the characteristics of CC-SAO that uses cross-component properties, CC-SAO cannot be applied to monochrome images (4:0:0, black and white images). However, in the conventional CC-SAO, since a first syntax element (e.g., sps_sao_enabled flag) is always transmitted regardless of the chroma format, as shown in Table 6 below, bit efficiency may be reduced.

[Table 6]

| | |
|---|---|
| **sps_sao_enabled_flag** | u(1) |
| **sps_ccsao_enabled_flag** | u(1) |
| **sps_alf_enabled flag** | u(1) |
| if( sps_alf_enabled_flag && sps_chroma_format_idc != 0 ) | |
| **sps_ccalf_enabled_flag** | u(1) |

In Embodiment 3-2, a method of not transmitting the first syntax element when the chroma format is monochrome (Table 7) and a method of determining whether to transmit the first syntax element by considering whether SAO is operating (activated or not) ( Table 8) are proposed.

[Table 7]

| | |
|---|---|
| **sps_sao_enabled_flag** | u(1) |
| if(sps_chroma_format_idc != 0 ) | |
| **sps_ccsao_enabled_flag** | u(1) |
| **sps_alf_enabled_flag** | u(1) |
| if( sps_alf_enabled_flag && sps_chroma_format_idc != 0) | |
| **sps_ccalf_enabled_flag** | u(1) |

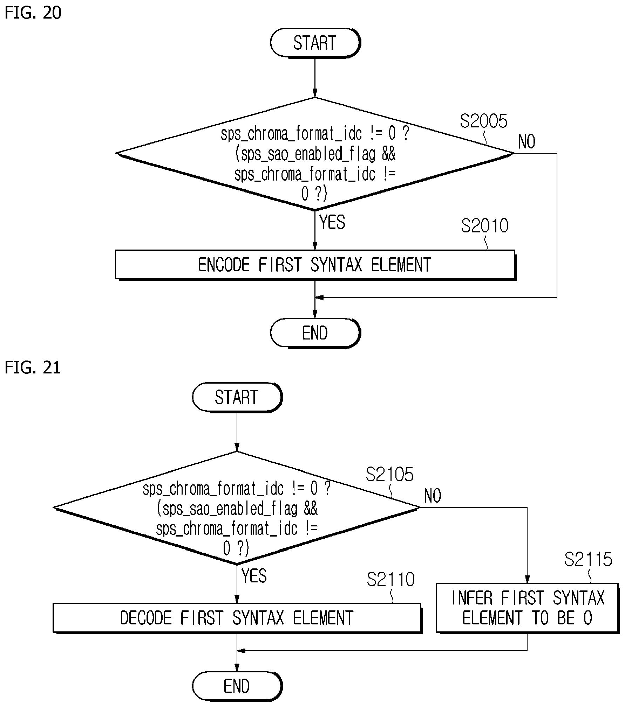

Referring to Table 7 and FIG. 20, the image encoding apparatus 100 may determine the chroma format of the reconstructed samples (S2005). The image encoding apparatus 100 may encode the first syntax element (e.g., sps_sao_enabled_flag) based on the chroma format of the reconstructed samples not being a monochrome format (YES in S2005) (S2010). In contrast, the image encoding apparatus 100 may not encode the first syntax element (e.g., sps_sao_enabled _flag) based on the chroma format of the reconstructed samples being a monochrome format (NO in S2005).

Referring to Table 7 and FIG. 20, the image encoding apparatus 100 may determine the chroma format of the reconstructed samples (S2105). The image decoding apparatus 200 may obtain the first syntax element (e.g., sps _sao_enabled _flag) from the bitstream based on the chroma format of the reconstructed samples not being a monochrome format (YES in S2105) (S2110). In contrast, the image decoding apparatus 200 may not decode the first syntax element (e.g., sps_sao_enabled _flag) based on the chroma format of the reconstructed samples being a monochrome format (NO in S2105). In this case, the value of the first syntax element (e.g., sps_sao_enabled _flag) may be inferred or set to a first value (S2115). Here, the first value may be a value indicating that CC-SAO is not activated (false).

[Table 8]

| | |
|---|---|
| **sps_sao_enabled_flag** | u(1) |
| if(sps_sao_enabled_flag && sps chroma_format_idc != 0 ) | |
| **sps_ccsao_enabled_flag** | u(1) |
| **sps_alf_enabled_flag** | u(1) |
| iff sps_alf_enabled_flag && sps_chroma_format_idc != 0) | |
| **sps_ccalf_enabled_flag** | u(1) |

Referring to Table 8 and FIG. 20, the image encoding apparatus 100 may determine whether CC-SAO is activated and the chroma format (sps_sao_enabled _flag && sps_chroma_format _idc !=0 ?) of the reconstructed samples (S2005). As SAO is activated, the image encoding apparatus 100 may encode the first syntax element (e.g.,

sps_sao_enabled_flag) based on the chroma format of the reconstructed samples not being a monochrome format (YES in S2005) (S2010). In contrast, the image encoding apparatus 100 may not encode the first syntax element (e.g., sps_sao_enabled_flag) based on SAO not being activated or the chroma format of the reconstructed samples being a monochrome format (NO in S2005).

Referring to Table 8 and FIG. 21, the image decoding apparatus 200 may determine whether CC-SAO is activated and the chroma format (sps_sao_enabled _flag && sps_chroma_format _idc !=0 ?) of the reconstructed samples (S2105). As SAO is activated, the image decoding apparatus 200 may obtain the first syntax element (e.g., sps_sao_enabled_flag) from the bitstream based on the chroma format of the reconstructed samples not being a monochrome format (YES in S2105) (S2110). In contrast, the image encoding apparatus 100 may not decode the first syntax element (e.g., sps_sao_enabled _flag) based on SAO not being activated or the chroma format of the reconstructed samples being a monochrome format (NO in S2105). In this case, the value of the first syntax element (e.g., sps _sao_enabled _flag) may be inferred or set to a first value (S2115). Here, the first value may be a value specifying that CC-SAO is not activated (false).

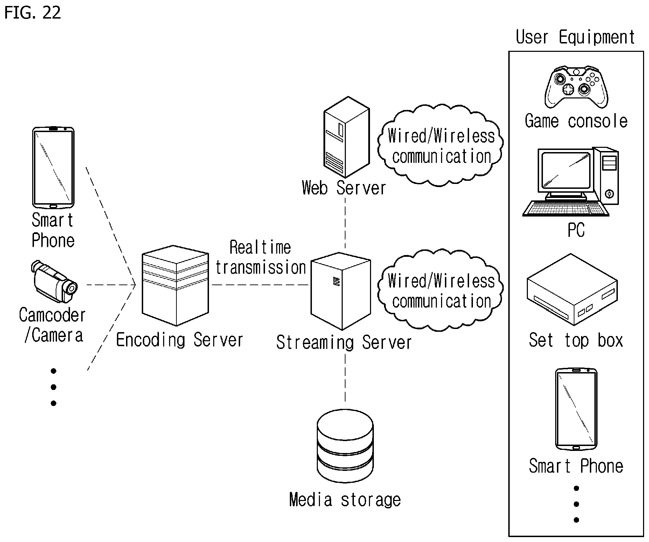

FIG. 22 is a view showing a content streaming system, to which an embodiment of the present disclosure is applicable.

As shown in FIG. 22, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, comprising:

   determining whether a cross component sample adaptive offset (CC-SAO) is activated based on a value of a first syntax element;
   deriving a collocated luma sample and collocated chroma samples corresponding to each other from reconstructed samples based on a chroma format of the reconstructed samples, based on the value of the first syntax element specifying that the CC-SAO is activated; and

determining an offset to be applied to the reconstructed samples based on the collocated luma sample and the collocated chroma samples.

2. The image decoding method of claim 1, wherein based on the chroma format of the reconstructed samples being a 4:4:4 chroma format, a luma sample located at the same location as the collocated chroma samples is derived as the collocated luma sample.

3. The image decoding method of claim 1, wherein based on the chroma format of the reconstructed samples being a predetermined chroma format, a luma sample located at a predetermined location among luma samples located nearby from locations of the collocated chroma samples is derived as the collocated luma sample.

4. The image decoding method of claim 3, wherein the predetermined chroma format is a 4:2:2 chroma format or a 4:2:0 chroma format.

5. The image decoding method of claim 1, wherein based on the chroma format of the reconstructed samples being a predetermined chroma format, the collocated luma sample is derived from less than 9 luma samples among luma samples located nearby from locations of the collocated chroma samples.

6. The image decoding method of claim 5, wherein the predetermined chroma format is any one of a 4:4:4 chroma format, a 4:2:2 chroma format or a 4:2:0 chroma format.

7. The image decoding method of claim 1, wherein the collocated chroma samples are derived by changing locations of chroma samples among the reconstructed samples based on the chroma format of the reconstructed samples.

8. The image decoding method of claim 7, wherein the collocated chroma samples are derived by changing a horizontal location of the chroma samples to a horizontal location of the collocated luma sample, based on the chroma format of the reconstructed samples not being a 4:4:4 chroma format.

9. The image decoding method of claim 7, wherein the collocated chroma samples are derived by changing a vertical location of the chroma samples to a vertical location of the collocated luma sample, based on the chroma format of the reconstructed samples being a 4:2:0 chroma format.

10. The image decoding method of claim 1, wherein the collocated luma sample is derived by changing a location of a luma sample among the reconstructed samples, based on the chroma format of the reconstructed samples.

11. The image decoding method of claim 10, wherein the collocated luma sample is derived by changing a horizontal location of the luma sample to a horizontal location of the collocated chroma samples, based on the chroma format of the reconstructed samples not being a 4:4:4 chroma format.

12. The image decoding method of claim 10, wherein the collocated luma sample is derived by changing a vertical location of the luma sample to a vertical location of the collocated chroma samples, based on the chroma format of the reconstructed samples being a 4:2:0 chroma format.

13. The image decoding method of claim 1, wherein the first syntax element is obtained from a bitstream based on the chroma format of the reconstructed samples not being a monochrome chroma format, and is inferred to be a value specifying that the CC-SAO is not activated based on the chroma format of the reconstructed samples being a monochrome chroma format.

14. An image encoding method performed by an image encoding apparatus, comprising:

deriving a collocated luma sample and collocated chroma samples corresponding to each other from reconstructed samples based on a chroma format of the reconstructed samples;
determining a cross component sample adaptive offset (CC-SAO) to be applied to the reconstructed samples based on the collocated luma sample and the collocated chroma samples; and
encoding a first syntax element specifying whether the CC-SAO is activated.

15. A method of transmitting a bitstream by an image encoding method, the image encoding method comprising:

deriving a collocated luma sample and collocated chroma samples corresponding to each other from reconstructed samples based on a chroma format of the reconstructed samples;

determining a cross component sample adaptive offset (CC-SAO) to be applied to the reconstructed samples based on the collocated luma sample and the collocated chroma samples; and

encoding a first syntax element specifying whether the CC-SAO is activated.

16. A computer-readable recording medium storing a bitstream by an image encoding method, the image encoding method comprising:

deriving a collocated luma sample and collocated chroma samples corresponding to each other from reconstructed samples based on a chroma format of the reconstructed samples;

determining a cross component sample adaptive offset (CC-SAO) to be applied to the reconstructed samples based on the collocated luma sample and the collocated chroma samples; and

encoding a first syntax element specifying whether the CC-SAO is activated.

FIG. 1

FIG. 2

FIG. 3

FIG. 4

× × × × × ×
O   O   O   • • •
× × × × × ×

× × × × × ×
O   O   O
× × × × × ×

× × × × × ×
O   O   O
× × × × × ×

× : Location of luma sample
O : Location of chroma sample

(a)

⊗ × ⊗ × ⊗ ×
      • • •
⊗ × ⊗ × ⊗ ×

⊗ × ⊗ × ⊗ ×

⊗ × ⊗ × ⊗ ×

⊗ × ⊗ × ⊗ ×

⊗ × ⊗ × ⊗ ×

× : Location of luma sample
O : Location of chroma sample

(b)

⊗ ⊗ ⊗ ⊗ ⊗ ⊗
      • • •
⊗ ⊗ ⊗ ⊗ ⊗ ⊗

⊗ ⊗ ⊗ ⊗ ⊗ ⊗

⊗ ⊗ ⊗ ⊗ ⊗ ⊗

⊗ ⊗ ⊗ ⊗ ⊗ ⊗

⊗ ⊗ ⊗ ⊗ ⊗ ⊗

× : Location of luma sample
O : Location of chroma sample

(c)

FIG. 5

500

505

```
┌─────────────────────────────┐
│  DEBLOCKING FILTERING       │
│  PROCESSING UNIT            │
└─────────────────────────────┘
```

510

RECONSTRUCTED
PICTURE

```
┌─────────────────────────────┐
│  SAO PROCESSING UNIT        │
└─────────────────────────────┘
```

MODIFIED
RECONSTRUCTED
PICTURE

515

```
┌─────────────────────────────┐
│  ALF PROCESSING UNIT        │
└─────────────────────────────┘
```

FIG. 6

START

S605

RECONSTRUCT CURRENT PICTURE (BASED ON
PREDICTION/RESIDUAL PROCESSING, ETC.)

S610

APPLY IN-LOOP FILTER

S615

ENCODE VIDEO/IMAGE INFORMATION
INCLUDING PREDICTION/RESIDUAL
INFORMATION/IN-LOOP FILTER PARAMETERS
(INCLUDING ALF PARAMETERS)

END

FIG. 7

700

705

DEBLOCKING FILTERING
PROCESSING UNIT

RECONSTRUCTED
PICTURE

710

SAO PROCESSING UNIT

MODIFIED
RECONSTRUCTED PICTURE
(DECODED PICTURE)

715

ALF PROCESSING UNIT

FIG. 8

START

S805

OBTAIN VIDEO/IMAGE
INFORMATION FROM BITSTREAM

S810

RECONSTRUCT CURRENT PICTURE (BASED ON
PREDICTION/RESIDUAL PROCESSING, ETC.)

S815

APPLY IN-LOOP FILTER

END

FIG. 9

(a)

(b)

(c)

(d)

FIG. 10

Maximum pixel value

Signal four offsets
from starting band

Starting band position

Minimum pixel value

FIG. 11

FIG. 12

Collocated & neighboring Y          Collocated U          Collocated V

FIG. 13

```
                    ┌──────────┐
                    │  START   │
                    └────┬─────┘
                         │                    S1305
                         ▼
        ┌────────────────────────────────────┐
        │  DERIVE COLLOCATED LUMA SAMPLE      │
        │  AND COLLOCATED CHROMA SAMPLES      │
        │  CORRESPONDING TO EACH OTHER        │
        │  FROM RECONSTRUCTED SAMPLES         │
        └────────────────┬───────────────────┘
                         │                    S1310
                         ▼
        ┌────────────────────────────────────┐
        │          DETERMINE OFFSET          │
        └────────────────┬───────────────────┘
                         │                    S1315
                         ▼
        ┌────────────────────────────────────┐
        │     ENCODE FIRST SYNTAX ELEMENT    │
        │     AND/OR CC-SAO PARAMETERS       │
        └────────────────┬───────────────────┘
                         │
                         ▼
                    ┌──────────┐
                    │   END    │
                    └──────────┘
```

FIG. 14

```
                    ┌──────────┐
                    │  START   │
                    └────┬─────┘
                         │                    S1405
                         ▼
        ┌────────────────────────────────────┐
        │      OBTAIN FIRST SYNTAX ELEMENT   │
        └────────────────┬───────────────────┘
                         │                    S1410
                         ▼
        ┌────────────────────────────────────┐
        │  DETERMINE WHETHER CC-SAO IS ACTIVATED │
        │  BASED ON VALUE OF FIRST SYNTAX ELEMENT │
        └────────────────┬───────────────────┘
                         │                    S1415
                         ▼
        ┌────────────────────────────────────┐
        │   DERIVE COLLOCATED LUMA SAMPLE    │
        │   AND COLLOCATED CHROMA SAMPLES    │
        │   CORRESPONDING EACH OTHER         │
        └────────────────┬───────────────────┘
                         │                    S1420
                         ▼
        ┌────────────────────────────────────┐
        │          DETERMINE OFFSET          │
        └────────────────┬───────────────────┘
                         │
                         ▼
                    ┌──────────┐
                    │   END    │
                    └──────────┘
```

FIG. 15

Collocated & neighboring Y          Collocated U          Collocated V

FIG. 16

Collocated & neighboring Y          Collocated U     Collocated V

FIG. 17

FIG. 18

```
                    ┌─────────┐
                    │  START  │
                    └────┬────┘
                         │
                         ▼
          ╔═══════════════════════════════╗         S1805
          ║           CHROMA              ║  ╭──────  YES
        ◁═║ FORMAT OF RECONSTRUCTED SAMPLES═▷──────────┐
          ║          = 4:4:4?             ║            │
          ╚═══════════════╤═══════════════╝            │
                          │ NO                  S1810  │
                          ▼                 ╭──────     │
  ┌─────────────────────────────────────────────────┐  │
  │ DERIVE COLLOCATED CHROMA SAMPLE/COLLOCATED LUMA  │  │
  │ SAMPLE BY CHANGING HORIZONTAL LOCATION OF CHROMA │  │
  │  SAMPLES/LUMA SAMPLE TO HORIZONTAL LOCATION OF   │  │
  │ COLLOCATED LUMA SAMPLE/COLLOCATED CHROMA SAMPLES │  │
  └──────────────────────┬──────────────────────────┘  │
                         │◄───────────────────────────┘
                         ▼
                    ┌─────────┐
                    │   END   │
                    └─────────┘
```

FIG. 19

```
                    ┌─────────┐
                    │  START  │
                    └────┬────┘
                         │
                         ▼
          ╔═══════════════════════════════╗         S1905
          ║           CHROMA              ║  ╭──────  NO
        ◁═║ FORMAT OF RECONSTRUCTED SAMPLES═▷──────────┐
          ║          = 4:2:0?             ║            │
          ╚═══════════════╤═══════════════╝            │
                          │ YES                 S1910  │
                          ▼                 ╭──────     │
  ┌─────────────────────────────────────────────────┐  │
  │ DERIVE COLLOCATED CHROMA SAMPLES/COLLOCATED LUMA │  │
  │  SAMPLE BY CHANGING VERTICAL LOCATION OF CHROMA  │  │
  │   SAMPLES/LUMA SAMPLE TO VERTICAL LOCATION OF    │  │
  │ COLLOCATED LUMA SAMPLE/COLLOCATED CHROMA SAMPLES │  │
  └──────────────────────┬──────────────────────────┘  │
                         │◄───────────────────────────┘
                         ▼
                    ┌─────────┐
                    │   END   │
                    └─────────┘
```

FIG. 20

```
                        ┌──────────┐
                        │  START   │
                        └──────────┘
                              │
                              ▼
                   ╱────────────────────╲                    S2005
                  ╱  sps_chroma_format_idc != 0 ?  ╲
                 ╱   (sps_sao_enabled_flag &&       ╲──────── NO ──┐
                 ╲    sps_chroma_format_idc !=       ╱              │
                  ╲            0 ?)                 ╱               │
                   ╲────────────────────╱                         │
                              │ YES                                │
                              ▼                       S2010        │
                 ┌──────────────────────────────────┐             │
                 │   ENCODE FIRST SYNTAX ELEMENT     │             │
                 └──────────────────────────────────┘             │
                              │◄──────────────────────────────────┘
                              ▼
                        ┌──────────┐
                        │   END    │
                        └──────────┘
```

FIG. 21

```
                        ┌──────────┐
                        │  START   │
                        └──────────┘
                              │
                              ▼
                   ╱────────────────────╲                    S2105
                  ╱  sps_chroma_format_idc != 0 ?  ╲
                 ╱   (sps_sao_enabled_flag &&       ╲──────── NO ──┐
                 ╲    sps_chroma_format_idc !=       ╱              │
                  ╲            0 ?)                 ╱               │
                   ╲────────────────────╱                         │
                              │ YES                                ▼    S2115
                              │                  S2110     ┌─────────────────────┐
                              ▼                            │  INFER FIRST SYNTAX │
                 ┌──────────────────────────────────┐     │  ELEMENT TO BE 0    │
                 │   DECODE FIRST SYNTAX ELEMENT     │     └─────────────────────┘
                 └──────────────────────────────────┘             │
                              │◄──────────────────────────────────┘
                              ▼
                        ┌──────────┐
                        │   END    │
                        └──────────┘
```

FIG. 22

<div align="center">

**INTERNATIONAL SEARCH REPORT**

</div>

| | International application No. |
|---|---|
| | **PCT/KR2022/009548** |

| A. | CLASSIFICATION OF SUBJECT MATTER |
|---|---|

**H04N 19/82**(2014.01)i; **H04N 19/117**(2014.01)i; **H04N 19/119**(2014.01)i; **H04N 19/96**(2014.01)i; **H04N 19/625**(2014.01)i; **H04N 19/124**(2014.01)i; **H04N 19/70**(2014.01)i; **H04N 19/186**(2014.01)i

According to International Patent Classification (IPC) or to both national classification and IPC

| B. | FIELDS SEARCHED |
|---|---|

Minimum documentation searched (classification system followed by classification symbols)

H04N 19/82(2014.01); H04N 19/00(2014.01); H04N 19/122(2014.01); H04N 19/176(2014.01); H04N 19/186(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), CC-SAO(cross component sample adaptive offset), 활성화(enabling), 신택스(syntax), 루마(luma), 크로마(chroma), 포맷(format)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KUO, Che-Wei et al. EE2-5.1: Cross-component Sample Adaptive Offset. JVET-W0066, Joint Video Experts Team (JVET) of ITU-T SG 16 WP 3 and ISO/IEC JTC 1/SC 29. 23rd Meeting, by teleconference. pp. 1-5, 01 July 2021.<br>See pages 1-2; and figures 1-2. | 1-16 |
| Y | US 2021-0084340 A1 (TENCENT AMERICA LLC) 18 March 2021 (2021-03-18)<br>See paragraphs [0025], [0136] and [0142]-[0144]; and figures 13 and 15A-15B. | 1-16 |
| Y | WO 2020-236038 A1 (HUAWEI TECHNOLOGIES CO., LTD.) 26 November 2020 (2020-11-26)<br>See page 47, lines 13-15 and page 58, lines 16-17; and figure 11. | 10-12 |
| A | US 2021-0168385 A1 (TENCENT AMERICA LLC) 03 June 2021 (2021-06-03)<br>See claims 1-8. | 1-16 |
| A | US 2021-0176501 A1 (MEDIATEK INC.) 10 June 2021 (2021-06-10)<br>See paragraphs [0007] and [0039]. | 1-16 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **29 September 2022** | **29 September 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<div align="center">

**INTERNATIONAL SEARCH REPORT**
**Information on patent family members**

</div>

| International application No. |
| --- |
| **PCT/KR2022/009548** |

| Patent document cited in search report | | | Publication date (day/month/year) | Patent family member(s) | | | Publication date (day/month/year) |
| --- | --- | --- | --- | --- | --- | --- | --- |
| US | 2021-0084340 | A1 | 18 March 2021 | CA | 3134982 | A1 | 25 March 2021 |
| | | | | CN | 113678441 | A | 19 November 2021 |
| | | | | EP | 4032268 | A1 | 27 July 2022 |
| | | | | JP | 2022-521515 | A | 08 April 2022 |
| | | | | KR | 10-2021-0114055 | A | 17 September 2021 |
| | | | | SG | 11202110393 | UA | 28 October 2021 |
| | | | | WO | 2021-055222 | A1 | 25 March 2021 |
| WO | 2020-236038 | A1 | 26 November 2020 | CN | 113632464 | A | 09 November 2021 |
| | | | | EP | 3912341 | A1 | 24 November 2021 |
| | | | | US | 2022-0078484 | A1 | 10 March 2022 |
| US | 2021-0168385 | A1 | 03 June 2021 | CN | 113875242 | A | 31 December 2021 |
| | | | | JP | 2022-526174 | A | 23 May 2022 |
| | | | | KR | 10-2021-0134032 | A | 08 November 2021 |
| | | | | US | 11343516 | B2 | 24 May 2022 |
| | | | | US | 2021-0168406 | A1 | 03 June 2021 |
| | | | | US | 2022-0264126 | A1 | 18 August 2022 |
| | | | | WO | 2021-108750 | A1 | 03 June 2021 |
| US | 2021-0176501 | A1 | 10 June 2021 | CN | 114731391 | A | 08 July 2022 |
| | | | | KR | 10-2022-0100731 | A | 15 July 2022 |
| | | | | US | 11432016 | B2 | 30 August 2022 |
| | | | | WO | 2021-110149 | A1 | 10 June 2021 |

Form PCT/ISA/210 (patent family annex) (July 2022)